# FASCICULE DE BREVET EUROPEEN

(11) **EP 3 274 232 B1**
(45) Date de publication et mention de la délivrance du brevet: **01.05.2019**
(21) Numéro de dépôt: 16711331.5
(22) Date de dépôt: 03.03.2016
(51) Int. Cl.: B60W 30/14

(54) **DISPOSITIF DE RÉGULATION DE VITESSE D'UN VÉHICULE PAR INSTAURATION D'UN PROFIL DE DÉCÉLÉRATION ADAPTÉ À UNE PROCHAINE LIMITATION DE VITESSE**
VORRICHTUNG ZUR STEUERUNG DER GESCHWINDIGKEIT EINES FAHRZEUGS DURCH ANWENDUNG EINES MIT EINER BEVORSTEHENDEN GESCHWINDIGKEITSBEGRENZUNG ABGESTIMMTEN VERZÖGERUNGSPROFILS
DEVICE FOR CONTROLLING THE SPEED OF A VEHICLE BY APPLYING A DECELERATION PROFILE THAT IS MATCHED TO AN UPCOMING SPEED LIMIT

(30) Priorité: 26.03.2015 FR 1552540
(43) Date de publication de la demande: 31.01.2018
(73) Titulaire: PSA AUTOMOBILES S.A., 78300 Poissy (FR)
(72) Inventeur: FERON, Stephane, 92350 Le Plessis Robinson (FR); TACCORI DUVERGEY, Celine, 92120 Montrouge (FR); LAINE, Vincent, 78340 Les Clayes Sous Bois (FR)
(74) Mandataire: Jeannin, Laurent Jean-Pierre
(86) Numéro de dépôt international: PCT/FR2016/050485
(87) Numéro de publication internationale: WO 2016/151213

(56) Documents cités:
- EP-A2- 2 712 781
- DE-A1- 10 358 968
- DE-A1-102012 014 468
- FR-A1- 3 003 835
- KR-B1- 101 500 164
- US-A1- 2010 161 195

## Description

L'invention concerne les véhicules, éventuellement de type automobile, et plus précisément la régulation automatique de la vitesse de tels véhicules.

Certains régulateurs de vitesse de véhicule offrent une fonction destinée à informer le conducteur dès qu'une nouvelle vitesse limite, inférieure à la vitesse de régulation en cours, a été détectée, et à proposer une nouvelle consigne de vitesse adaptée à cette nouvelle vitesse limite. Cette nouvelle vitesse limite est obtenue soit grâce à la lecture du panneau indicateur de limitation de vitesse lointain par une caméra installée dans une partie avant du véhicule, soit dans une base de données cartographique stockée dans le véhicule, soit encore lors d'une transmission par voie d'ondes. Si le conducteur accepte cette proposition de nouvelle consigne de vitesse, il doit appuyer sur un organe de commande dédié, et le régulateur de vitesse déclenche immédiatement l'application d'une décélération destinée à contraindre le véhicule à rouler à la vitesse définie par la nouvelle consigne acceptée.

La nouvelle vitesse limite étant détectée juste avant son panneau indicateur, et le conducteur mettant généralement un certain temps pour réagir avant d'accepter la nouvelle consigne de vitesse proposée, le véhicule se trouve généralement en excès de vitesse lorsqu'il parvient au niveau du panneau indicateur. Cela résulte notamment du fait que le profil de décélération qui est appliqué pour ralentir le véhicule présente une pente assez faible pour ne pas dégrader le confort des passagers, et donc le temps de décélération est assez long.

La zone dans laquelle le véhicule est en excès de vitesse (ou survitesse) peut s'avérer problématique lorsque le véhicule est également équipé d'un dispositif chargé de contrôler automatiquement sa direction (véhicule automatisé). En effet, sur autoroute un changement de limitation de vitesse est très souvent lié à des variations de rayon de courbure des virages, et donc si le véhicule roule à une vitesse supérieure à la vitesse limite son dispositif de contrôle peut être incapable de lui faire prendre un virage.

Pour tenter de remédier à cet inconvénient, il a été proposé d'effectuer notablement plus tôt la proposition de nouvelle consigne de vitesse, afin de laisser le temps au véhicule de décélérer avant le panneau indicateur. Cela implique que le véhicule dispose longtemps à l'avance des informations relatives aux limitations de vitesse sur la voie de circulation qu'il emprunte.

Cette dernière solution est certes plus sûre, mais elle occasionne une gêne pour les autres conducteurs puisque dès que le conducteur a accepté la nouvelle consigne son véhicule décélère jusqu'à la vitesse définie par cette nouvelle consigne, puis circule par anticipation à cette nouvelle vitesse, qui est notablement inférieure à la vitesse limite en cours, jusqu'au prochain panneau indicateur, sans que les autres conducteurs ne puissent en comprendre la raison. Ainsi, en fonction des vitesses considérées et de la configuration du terrain, la durée pendant laquelle le véhicule circule à la nouvelle vitesse peut être comprise entre environ quinze secondes et environ trente secondes.

On connait par le document FR 3 003 835 un dispositif de régulation de la vitesse d'un véhicule, qui comprend des moyens de traitement agencés, en réponse à une validation par un conducteur dudit véhicule d'une nouvelle vitesse limite devant être respectée à partir d'une position connue et inférieure à une vitesse de régulation en cours, pour déclencher l'instauration d'un profil de décélération, propre à faire décroître ladite vitesse de régulation en cours jusqu'à une nouvelle vitesse de régulation au plus égale à ladite nouvelle vitesse limite sensiblement à ladite position connue.

L'invention a donc notamment pour but d'améliorer la situation, afin de limiter autant que possible la gêne occasionnée par un changement de vitesse de régulation d'un véhicule.

Elle propose notamment à cet effet un dispositif, destiné à réguler la vitesse d'un véhicule, et comprenant des moyens de traitement agencés, en réponse à une validation par un conducteur du véhicule d'une nouvelle vitesse limite devant être respectée à partir d'une position connue et inférieure à une vitesse de régulation en cours, pour déclencher l'instauration d'un profil de décélération choisi, propre à faire décroître la vitesse de régulation en cours jusqu'à une nouvelle vitesse de régulation au plus égale à la nouvelle vitesse limite sensiblement à la position connue, entre une première position, comprise entre une position primaire du véhicule à un instant où le conducteur effectue la validation précitée et une seconde position à laquelle on peut au plus tard déclencher l'instauration d'un profil de décélération maximal, et cette seconde position.

Ainsi, on est assuré que le véhicule roule à une vitesse respectant la nouvelle limitation de vitesse à l'endroit où est situé le panneau indicateur correspondant, après avoir gêné le moins possible les autres conducteurs.

Le dispositif de régulation selon l'invention peut comporter d'autres caractéristiques qui peuvent être prises séparément ou en combinaison, et notamment :
- dans un premier mode de réalisation, ses moyens de traitement peuvent être agencés pour choisir comme profil de décélération à instaurer le profil de décélération maximal, et pour déclencher l'instauration lorsque le véhicule est dans la seconde position ;
- dans un deuxième mode de réalisation, le profil de décélération peut être choisi par le conducteur dans un groupe qui comprend au moins un profil de décélération intermédiaire prédéfini et le profil de décélération maximal ; 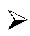 chaque profil de décélération intermédiaire prédéfini est propre à faire décroître la vitesse de régulation en cours jusqu'à la nouvelle vitesse de régulation, entre une position intermédiaire, située en amont de la seconde position et fonction de la position connue, et cette position connue ;
   - ses moyens de traitement peuvent être agencés, lorsque la position primaire est située en aval de la position intermédiaire et que le conducteur a choisi un profil de décélération intermédiaire prédéfini correspondant, pour instaurer le profil de décélération maximal, et pour déclencher l'instauration de ce dernier lorsque le véhicule est dans la seconde position ;
- dans un troisième mode de réalisation, ses moyens de traitement peuvent être agencés pour choisir un profil de décélération propre à faire décroître la vitesse de régulation en cours jusqu'à la nouvelle vitesse de régulation, entre la position primaire et la position connue, et pour déclencher l'instauration lorsque le véhicule est dans la position primaire ; 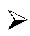 ses moyens de traitement peuvent être agencés pour informer le conducteur de la nouvelle vitesse limite lorsque le véhicule est situé à une distance de la position connue, nécessaire pour faire décroître la vitesse de régulation en cours jusqu'à la nouvelle vitesse de régulation sensiblement à la position connue selon un profil de décélération minimal ;
   - le profil de décélération minimal peut correspondre à une décélération que subirait le véhicule si le conducteur n'appuyait plus sur une pédale d'accélérateur.

L'invention propose également un véhicule, éventuellement de type automobile, et comprenant un dispositif de régulation du type de celui présenté ci-avant.

D'autres caractéristiques et avantages de l'invention apparaîtront à l'examen de la description détaillée ci-après, et des dessins annexés, sur lesquels:
- la figure 1 illustre schématiquement et fonctionnellement un véhicule comprenant un calculateur de supervision du groupe motopropulseur comportant un dispositif de régulation de vitesse selon l'invention,
- la figure 2 illustre au sein d'un diagramme un exemple de courbe d'évolution de la vitesse d'un véhicule, faisant l'objet d'une régulation de vitesse selon un profil de décélération maximal, en fonction de la distance,
- la figure 3 illustre au sein d'un diagramme un exemple de courbe d'évolution de la vitesse d'un véhicule, faisant l'objet d'une régulation de vitesse selon un profil de décélération choisi parmi plusieurs prédéfinis, en fonction de la distance, et
- la figure 4 illustre au sein d'un diagramme un exemple de courbe d'évolution de la vitesse d'un véhicule, faisant l'objet d'une régulation de vitesse selon un profil de décélération variable, en fonction de la distance.

L'invention a notamment pour but de proposer un dispositif de régulation de vitesse DR destiné à permettre une régulation de vitesse d'un véhicule V en présence de limitations de vitesse variables.

Dans ce qui suit, on considère, à titre d'exemple non limitatif, que le véhicule V est de type automobile. Il s'agit par exemple d'une voiture. Mais l'invention n'est pas limitée à ce type de véhicule. Elle concerne en effet tout type de véhicule terrestre pouvant circuler sur des voies de circulation faisant l'objet de limitations de vitesses variables. Ainsi, elle concerne également et non limitativement les véhicules utilitaires, les motocyclettes, les cars, et les camions.

Par ailleurs, on considère dans ce qui suit, à titre d'exemple non limitatif, que le véhicule V comprend un groupe motopropulseur (ou GMP) GM de type conventionnel, c'est-à-dire ne comportant comme source de couple qu'un moteur thermique MT. Mais ce véhicule pourrait comprendre un groupe motopropulseur de type hybride, c'est-à-dire comportant au moins un moteur thermique et au moins une machine auxiliaire capable de fournir du couple à partir de l'énergie stockée dans des moyens de stockage d'énergie (comme par exemple un moteur électrique ou à air comprimé), ou de type tout électrique, c'est-à-dire comportant au moins un moteur électrique.

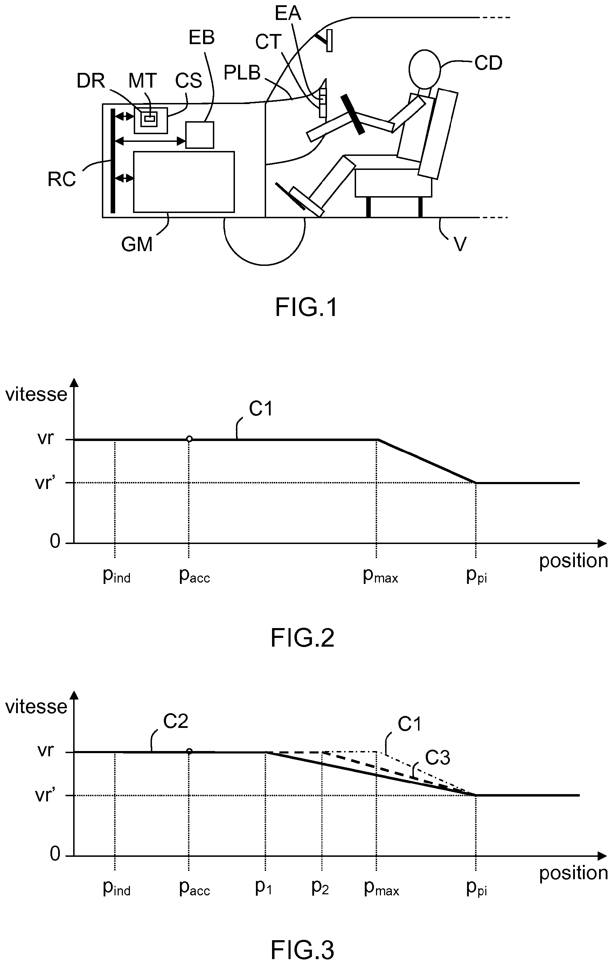

On a schématiquement représenté sur la figure 1 un véhicule V comprenant un groupe motopropulseur GM (couplé au moins à une pédale d'accélérateur et à une pédale de frein), un calculateur de supervision CS propre à superviser le fonctionnement du groupe motopropulseur GM, et un dispositif de régulation de vitesse DR selon l'invention.

Par exemple, et comme illustré non limitativement, le véhicule V peut comprendre un réseau de communication embarqué RC, éventuellement de type multiplexé, et permettant à des équipements électroniques embarqués (et notamment le calculateur de supervision CS et l'ordinateur de bord), qui sont connectés à lui, d'échanger des informations et instructions. Ainsi, le calculateur de supervision CS peut contrôler le groupe motopropulseur GM en lui transmettant des instructions via le réseau de communication embarqué RC.

Le dispositif de régulation de vitesse DR est chargé de contrôler la régulation de vitesse du véhicule V au moyen de consignes de vitesse sélectionnées par le conducteur CD ou bien qu'il a déterminées, éventuellement en fonction d'instructions fournies par le conducteur CD.

Dans l'exemple non limitatif illustré sur la figure 1, le dispositif de régulation de vitesse DR fait partie du calculateur de supervision CS. Mais cela n'est pas obligatoire. Ce dispositif de régulation de vitesse DR pourrait en effet être un équipement indépendant, éventuellement couplé au calculateur de supervision CS. Par conséquent, le dispositif de régulation de vitesse DR peut être réalisé sous la forme de modules logiciels (ou informatiques ou encore « software »), ou bien d'une combinaison de circuits électroniques (ou « hardware ») et de modules logiciels.

Comme illustré sur la figure 1, un dispositif de régulation de vitesse DR, selon l'invention, comprend principalement des moyens de traitement MT. Ce dispositif de régulation de vitesse DR est activé par le conducteur CD du véhicule V au moyen d'un organe de commande, éventuellement dédié, ou d'une commande vocale dédiée, ou encore d'une sélection d'une option dans un menu affiché sur un écran du véhicule V (par exemple celui du combiné central installé dans la planche de bord PLB). L'organe de commande peut, par exemple, être une manette (ou un commodo), éventuellement dédié.

On entend ici par « activer » le fait de valider une proposition de nouvelle consigne de régulation vr faite par le véhicule V.

Lorsque le dispositif de régulation de vitesse DR a été activé, ses moyens de traitement MT sont agencés, en réponse à une validation par le conducteur CD d'une nouvelle vitesse limite vl' devant être respectée à partir d'une position connue pₚᵢ et inférieure à la vitesse de régulation vr en cours, pour déclencher l'instauration d'un profil de décélération choisi.

Cette validation peut être effectuée par le conducteur CD au moyen d'un organe de commande, éventuellement dédié, ou d'une commande vocale dédiée, ou encore d'une sélection d'une option dans un menu affiché sur un écran du véhicule V.

On notera que les moyens de traitement MT peuvent être chargés de déclencher l'affichage de cette nouvelle vitesse limite vl' sur au moins un écran EA du véhicule V. Cet écran EA fait, par exemple, partie du combiné central de la planche de bord PLB ou du combiné d'instrumentation CT du tableau de bord (comme illustré non limitativement sur la figure 1), ou bien il s'agit d'une partie du pare-brise qui est utilisée par un dispositif d'affichage tête haute. On notera que les moyens de traitement MT peuvent être également chargés de déclencher simultanément l'affichage d'une nouvelle vitesse de régulation vr' qu'ils proposent d'instaurer en remplacement de celle en cours (vr) pour respecter la nouvelle vitesse limite vl'.

La nouvelle vitesse limite vl' est une information accessible via le réseau de communication embarqué RC et soit contenue dans une base de données cartographiques stockée dans un équipement EB (éventuellement de type logiciel) que comprend le véhicule V, soit reçue par voie d'ondes en provenance d'un système de fourniture d'informations routières. Cet équipement EB peut être, par exemple, dédié à la fourniture d'informations cartographiques (et notamment routières) et au calcul de trajet pour les passagers du véhicule V.

La distance qui sépare la position connue pₚᵢ, du lieu où commencera la nouvelle vitesse limite vl' à respecter, de la position géographique p_{ind}, où se trouve situé le véhicule V lorsqu'il affiche cette nouvelle vitesse limite vl' ainsi qu'éventuellement la proposition de nouvelle vitesse de régulation vr', est connue des moyens de traitement MT à chaque instant grâce à des données de localisation du véhicule V qui leurs sont fournies par un équipement situé dans le véhicule V (par exemple un dispositif de localisation par satellites ou par téléphone).

Comme illustré non limitativement sur les figures 2 à 4, le profil de décélération choisi, qui doit être instauré, est propre à faire décroître la vitesse de régulation en cours vr jusqu'à une nouvelle vitesse de régulation vr', qui est au plus égale à la nouvelle vitesse limite vl' sensiblement à la position connue pₚᵢ. Cette décroissance doit avoir lieu entre, d'une part, une première position, comprise entre une position primaire p_{acc} que possède le véhicule V à un instant où son conducteur CD effectue la validation de la nouvelle vitesse limite vl' proposée et une seconde position pₘₐₓ à laquelle on peut au plus tard déclencher l'instauration d'un profil de décélération maximal, et, d'autre part, cette seconde position pₘₐₓ.

On entend ici par « profil de décélération» la variation de la vitesse du véhicule V qui permet à ce dernier (V) de passer de la vitesse vr à la vitesse vr'.

Par ailleurs, on entend ici par « profil de décélération maximal » le profil de décélération qui permet de faire passer le véhicule V le plus rapidement de vr à vr' sans que la dégradation du confort des passagers ne dépasse un seuil prédéfini et sans que le comportement du véhicule V ne soit dangereux pour les autres usagers de la route (par exemple du fait d'un freinage brutal sans raison apparente).

Un exemple non limitatif de profil de décélération maximal est illustré sur la figure 2 entre la seconde position pₘₐₓ (associée à vr) et la position connue pₚᵢ (associée à vr'). Dans cet exemple non limitatif le profil de décélération maximal est sensiblement linéaire. Mais cela n'est pas obligatoire. Il suffit en effet qu'il soit monotone décroissant.

Le profil de décélération, à instaurer entre la première position (comprise entre la position primaire p_{acc} et la seconde position pₘₐₓ), et la seconde position pₘₐₓ, peut être choisi d'au moins trois façons différentes.

Dans une première façon, ce sont les moyens de traitement MT qui sont agencés pour choisir systématiquement comme profil de décélération à instaurer le profil de décélération maximal, et pour déclencher l'instauration de ce dernier lorsque le véhicule V est dans la seconde position pₘₐₓ indépendamment de la position primaire p_{acc} (position de validation par le conducteur).

Cette première façon est illustrée non limitativement sur la figure 2. Plus précisément, la courbe C1 de la figure 2 comprend trois parties. Dans la première partie le véhicule V roule à la vitesse vr qui est égale à la consigne de vitesse de régulation. Pendant cette première partie les moyens de traitement MT déclenchent l'affichage d'une nouvelle vitesse limite vl' ainsi qu'éventuellement d'une nouvelle vitesse de régulation vr' proposée au conducteur CD en remplacement de celle en cours (vr) pour respecter la nouvelle vitesse limite vl'. Cet affichage est déclenché à un instant t0 où le véhicule V est dans la position d'indication p_{ind}. Toujours pendant cette première partie, le conducteur CD accepte la proposition affichée à un instant t1 où le véhicule V est dans la position primaire p_{acc} et qui est légèrement postérieur à t0. Entre cet instant t1 et un instant t2, où le véhicule V est dans la seconde position pₘₐₓ, le véhicule V indique au conducteur CR que sa validation est bien prise en compte et il maintient la vitesse vr.

Dans la deuxième partie les moyens de traitement MT déclenchent l'instauration du profil de décélération maximal entre l'instant t2 et un instant t3, où le véhicule V parvient à la position connue pₚᵢ du panneau indicateur imposant la nouvelle limitation de vitesse vl'. Cette instauration est destinée à faire décroître la vitesse du véhicule V de la valeur en cours vr à la valeur vr' (en pₚᵢ).

Dans la troisième partie les moyens de traitement MT délivrent une même consigne de régulation de vitesse pour que le véhicule V roule de façon sensiblement constante à la nouvelle vitesse de régulation vr'.

Dans une deuxième façon, c'est le conducteur CD qui choisit le profil de décélération dans un groupe qui comprend au moins un profil de décélération intermédiaire prédéfini et le profil de décélération maximal. A cet effet, le dispositif de régulation DR peut déclencher l'affichage sur au moins un écran du véhicule V de données définissant chaque profil de décélération proposé afin que le conducteur puisse choisir l'un d'entre eux. Cet écran EA fait, par exemple, partie du combiné central de la planche de bord PLB ou du combiné d'instrumentation CT du tableau de bord. Par exemple on peut proposer au conducteur CD un « profil de décélération doux », un « profil de décélération fort », et un éventuel « profil de décélération moyen ». Le conducteur CD peut effectuer son choix au moyen d'un organe de commande, éventuellement dédié, ou d'une commande vocale dédiée, ou encore d'une sélection d'une option dans un menu affiché sur un écran du véhicule V.

On notera que dans cette deuxième façon chaque profil de décélération intermédiaire prédéfini peut être propre à faire décroître la vitesse de régulation en cours vr jusqu'à la nouvelle vitesse de régulation vr', entre une position intermédiaire pⱼ, située en amont de la seconde position pₘₐₓ et fonction de la position connue pₚᵢ du panneau indicateur imposant la nouvelle limitation de vitesse vl', et cette position connue pₚᵢ.

On notera également que dans cette deuxième façon les moyens de traitement MT peuvent être avantageusement agencés, lorsque la position primaire p_{acc} est située en aval de (ou après) la position intermédiaire pj et que le conducteur CD a choisi le profil de décélération intermédiaire prédéfini correspondant, pour instaurer le profil de décélération maximal, et pour déclencher l'instauration de ce dernier lorsque le véhicule V est dans la seconde position pₘₐₓ.

La deuxième façon est illustrée non limitativement sur la figure 3. Plus précisément, la courbe C2 de la figure 3 comprend trois parties. Dans la première partie le véhicule V roule à la vitesse vr qui est égale à la consigne de vitesse de régulation. Pendant cette première partie les moyens de traitement MT déclenchent l'affichage d'une nouvelle vitesse limite vl' ainsi qu'éventuellement d'une nouvelle vitesse de régulation vr' proposée au conducteur CD en remplacement de celle en cours (vr) pour respecter la nouvelle vitesse limite vl'. Cet affichage est déclenché à un instant t0 où le véhicule V est dans la position d'indication p_{ind}. Toujours pendant cette première partie, le conducteur CD accepte la proposition affichée et choisit, par exemple, un premier profil de décélération intermédiaire à un instant t1 où le véhicule V est dans la position primaire p_{acc} et qui est légèrement postérieur à t0.

Dans la deuxième partie les moyens de traitement MT déclenchent l'instauration du premier profil de décélération intermédiaire entre un instant t2, où le véhicule V est dans la position intermédiaire p₁ (j = 1 - associée au premier profil de décélération intermédiaire choisi), et un instant t3, où le véhicule V parvient à la position connue pₚᵢ du panneau indicateur imposant la nouvelle limitation de vitesse vl'. Cette instauration est destinée à faire décroître la vitesse du véhicule V de la valeur en cours vr à la valeur vr'.

On notera que dans la figure 3 se trouve également représentée une courbe C3 (en tirets), comprenant un second profil de décélération intermédiaire (entre la position intermédiaire p₂ (j = 2 - comprise entre pi et pₘₐₓ) et la position connue pₚᵢ), et une courbe C1 (en points-tirets), comprenant le profil de décélération maximal (entre la seconde position pₘₐₓ et la position connue pₚᵢ).

Dans la troisième partie les moyens de traitement MT délivrent une même consigne de régulation de vitesse pour que le véhicule V roule de façon sensiblement constante à la nouvelle vitesse de régulation vr'.

On notera également que dans l'exemple illustré non limitativement sur la figure 3 les premier et second profils de décélération intermédiaires sont sensiblement linéaires. Mais cela n'est pas obligatoire. Il suffit en effet qu'ils soient monotones décroissants.

Dans une troisième façon, ce sont les moyens de traitement MT qui sont agencés pour choisir un profil de décélération qui est propre à faire décroître la vitesse de régulation en cours vr jusqu'à la nouvelle vitesse de régulation vr', entre la position primaire p_{acc} et la position connue pₚᵢ, et pour déclencher l'instauration de ce profil de décélération choisi lorsque le véhicule V est dans cette position primaire p_{acc}.

Dans cette troisième façon, les moyens de traitement MT peuvent, par exemple, être agencés pour informer le conducteur CD de la nouvelle vitesse limite vl' (ainsi qu'éventuellement de la proposition de nouvelle vitesse de régulation vr') lorsque le véhicule V est situé à une distance de la position connue pₚᵢ qui est nécessaire pour faire décroître la vitesse de régulation en cours vr jusqu'à la nouvelle vitesse de régulation vr' sensiblement à la position connue pₚᵢ selon un profil de décélération minimal.

On entend ici par « profil de décélération minimal » le profil de décélération qui permet au véhicule V de passer le plus lentement de vr à vr' en utilisant le frein moteur et sans actionnement des freins.

Par exemple, ce profil de décélération minimal correspond à une décélération que subirait le véhicule V si son conducteur CD n'appuyait plus sur sa pédale d'accélérateur.

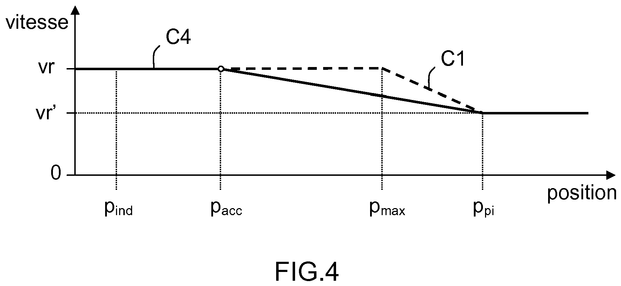

La troisième façon est illustrée non limitativement sur la figure 4. Plus précisément, la courbe C4 de la figure 4 comprend trois parties. Dans la première partie le véhicule V roule à la vitesse vr qui est égale à la consigne de vitesse de régulation. Pendant cette première partie les moyens de traitement MT déclenchent l'affichage d'une nouvelle vitesse limite vl' ainsi qu'éventuellement d'une nouvelle vitesse de régulation vr' proposée au conducteur CD en remplacement de celle en cours (vr) pour respecter la nouvelle vitesse limite vl'. Cet affichage est déclenché à un instant t0 où le véhicule V est dans une position d'indication p_{ind} qui est située à une distance (pₚᵢ - p_{ind}) de la position connue pₚᵢ qui est nécessaire pour faire décroître la vitesse de régulation de vr à vr' sensiblement à la position connue pₚᵢ selon un profil de décélération minimal. Toujours pendant cette première partie, le conducteur CD accepte la proposition affichée à un instant t1 où le véhicule V est dans la position primaire p_{acc} et qui est postérieur à t0.

Dans la deuxième partie les moyens de traitement MT déclenchent l'instauration du profil de décélération entre l'instant t1, où le véhicule V est dans la position primaire p_{acc}, et un instant t3, où le véhicule V parvient à la position connue pₚᵢ du panneau indicateur imposant la nouvelle limitation de vitesse vl'. Cette instauration est destinée à faire décroître la vitesse du véhicule V de la valeur en cours vr à l'instant t1 à la valeur vr' à l'instant t3. On comprendra que le profil de décélération qui est instauré entre t1 et t3 dépend de l'instant t1 où le conducteur CD accepte la proposition affichée.

On notera que dans la figure 4 se trouve également représentée une courbe C1 (en tirets), comprenant le profil de décélération maximal (entre la seconde position pₘₐₓ et la position connue pₚᵢ).

Dans la troisième partie les moyens de traitement MT délivrent une même consigne de régulation de vitesse pour que le véhicule V roule de façon sensiblement constante à la nouvelle vitesse de régulation vr'.

On notera également que dans l'exemple illustré non limitativement sur la figure 4 le profil de décélération est sensiblement linéaire. Mais cela n'est pas obligatoire. Il suffit en effet qu'il soit monotone décroissant.

On notera également que les moyens de traitement MT peuvent éventuellement être agencés de manière à déclencher l'affichage en temps réel de la progression du véhicule V entre la position d'indication p_{ind} et la seconde position pₘₐₓ afin qu'il visualise la zone dans laquelle il peut encore accepter la proposition qui lui a été faite dans la position d'indication p_{ind}. En variante ou en complément, ils peuvent également et éventuellement être agencés de manière à déclencher l'affichage d'un message à l'instant où débute l'instauration du profil de décélération choisi.

L'invention permet avantageusement d'avoir un véhicule qui roule à une vitesse respectant une nouvelle limitation de vitesse à l'endroit où est situé le panneau indicateur correspondant, tout en gênant le moins possible les autres conducteurs, et en permettant éventuellement au conducteur de choisir son profil de décélération, notamment en fonction du trafic et/ou de ses objectifs d'éco-conduite.

## Revendications

1. Dispositif (DR) de régulation de la vitesse d'un véhicule (V), comprenant des moyens de traitement (MT) agencés, en réponse à une validation par un conducteur dudit véhicule (V) d'une nouvelle vitesse limite devant être respectée à partir d'une position connue et inférieure à une vitesse de régulation en cours, pour déclencher l'instauration d'un profil de décélération choisi, propre à faire décroître ladite vitesse de régulation en cours jusqu'à une nouvelle vitesse de régulation au plus égale à ladite nouvelle vitesse limite sensiblement à ladite position connue, entre une première position, comprise entre une position primaire dudit véhicule (V) à un instant où ledit conducteur effectue ladite validation et une seconde position à laquelle on peut au plus tard déclencher l'instauration d'un profil de décélération maximal, et ladite seconde position.

2. Dispositif selon la revendication 1, **caractérisé en ce que** lesdits moyens de traitement (MT) sont agencés pour choisir comme profil de décélération à instaurer ledit profil de décélération maximal, et pour déclencher ladite instauration lorsque ledit véhicule (V) est dans ladite seconde position.

3. Dispositif selon la revendication 1, **caractérisé en ce que** ledit profil de décélération est choisi par ledit conducteur dans un groupe comprenant au moins un profil de décélération intermédiaire prédéfini et ledit profil de décélération maximal.

4. Dispositif selon la revendication 3, **caractérisé en ce que** chaque profil de décélération intermédiaire prédéfini est propre à faire décroître ladite vitesse de régulation en cours jusqu'à ladite nouvelle vitesse de régulation, entre une position intermédiaire, située en amont de ladite seconde position et fonction de ladite position connue, et ladite position connue.

5. Dispositif selon la revendication 4, **caractérisé en ce que** lesdits moyens de traitement (MT) sont agencés, lorsque ladite position primaire est située en aval de ladite position intermédiaire et que ledit conducteur a choisi ledit profil de décélération intermédiaire prédéfini correspondant, pour instaurer ledit profil de décélération maximal, et pour déclencher ladite instauration lorsque ledit véhicule (V) est dans ladite seconde position.

6. Dispositif selon la revendication 1, **caractérisé en ce que** lesdits moyens de traitement (MT) sont agencés pour choisir un profil de décélération propre à faire décroître ladite vitesse de régulation en cours jusqu'à ladite nouvelle vitesse de régulation, entre ladite position primaire et ladite position connue, et pour déclencher ladite instauration lorsque ledit véhicule (V) est dans ladite position primaire.

7. Dispositif selon la revendication 6, **caractérisé en ce que** lesdits moyens de traitement (MT) sont agencés pour informer ledit conducteur de ladite nouvelle vitesse limite lorsque ledit véhicule (V) est situé à une distance de ladite position connue, nécessaire pour faire décroître ladite vitesse de régulation en cours jusqu'à ladite nouvelle vitesse de régulation sensiblement à ladite position connue selon un profil de décélération minimal.

8. Dispositif selon la revendication 7, **caractérisé en ce que** ledit profil de décélération minimal correspond à une décélération que subirait ledit véhicule (V) si ledit conducteur n'appuyait plus sur une pédale d'accélérateur.

9. Véhicule (V), **caractérisé en ce qu'**il comprend un dispositif de régulation (DR) selon l'une des revendications 1 à 8.

10. Véhicule selon la revendication 9, **caractérisé en ce qu'**il est de type automobile.

## Patentansprüche

1. Vorrichtung (DR) zum Steuern der Geschwindigkeit eines Fahrzeugs (V), die Verarbeitungsmittel (MT) umfasst, die eingerichtet sind, um als Reaktion auf eine Bestätigung durch einen Fahrer des Fahrzeugs (V) einer neuen Geschwindigkeitsbegrenzung, die ausgehend von einer bekannten Position eingehalten werden soll und die kleiner ist als eine aktuelle Steuerungsgeschwindigkeit, das Anwenden eines ausgewählten Verzögerungsprofils auszulösen, das geeignet ist, die aktuelle Steuerungsgeschwindigkeit bis zu einer neuen Steuerungsgeschwindigkeit, die höchstens gleich der neuen Geschwindigkeitsbegrenzung ist, im Wesentlichen an der bekannten Position, zwischen einer ersten Position, die zwischen einer Primärposition des Fahrzeugs (V) in einem Augenblick, in dem der Fahrer die Bestätigung ausführt, und einer zweiten Position liegt, in der das Anwenden eines maximalen Verzögerungsprofil spätestens ausgelöst werden kann, und der zweiten Position zu verringern.

2. Vorrichtung nach Anspruch 1, **dadurch gekennzeichnet, dass** die Verarbeitungsmittel (MT) eingerichtet sind, um als anzuwendendes Verzögerungsprofil das maximale Verzögerungsprofil auszuwählen, und um die Anwendung auszulösen, wenn das Fahrzeug (V) in der zweiten Position ist.

3. Vorrichtung nach Anspruch 1, **dadurch gekennzeichnet, dass** das Verzögerungsprofil von dem Fahrer aus einer Gruppe ausgewählt wird, die mindestens ein vordefiniertes Zwischenverzögerungsprofil und das maximale Verzögerungsprofil umfasst.

4. Vorrichtung nach Anspruch 3, **dadurch gekennzeichnet, dass** jedes vordefinierte Zwischenverzögerungsprofil geeignet ist, um die aktuelle Steuerungsgeschwindigkeit bis zu der neuen Verzögerungsgeschwindigkeit zwischen einer Zwischenposition, die stromaufwärts der zweiten Position liegt und von der bekannten Position abhängt, und der bekannten Position zu verlangsamen.

5. Vorrichtung nach Anspruch 4, **dadurch gekennzeichnet, dass** die Verarbeitungsmittel (MT) eingerichtet sind, um, wenn die Primärposition stromabwärts der Zwischenposition liegt und der Fahrer das entsprechende vordefinierte Zwischenverzögerungsprofil ausgewählt hat, das maximale Verzögerungsprofil anzuwenden und die Anwendung auszulösen, wenn das Fahrzeug (V) in der zweiten Position ist.

6. Vorrichtung nach Anspruch 1, **dadurch gekennzeichnet, dass** die Verarbeitungsmittel (MT) eingerichtet sind, um ein Verzögerungsprofil auszuwählen, das geeignet ist, um die aktuelle Steuerungsgeschwindigkeit bis zu der neuen Steuerungsgeschwindigkeit zwischen der Primärposition und der bekannten Position zu verlangsamen, und um die Anwendung auszulösen, wenn das Fahrzeug (V) in der Primärposition ist.

7. Vorrichtung nach Anspruch 6, **dadurch gekennzeichnet, dass** die Verarbeitungsmittel (MT) eingerichtet sind, um den Fahrer über die neue Geschwindigkeitsbegrenzung zu informieren, wenn das Fahrzeug (V) in einer Entfernung von der bekannten Position ist, die erforderlich ist, um die aktuelle Steuerungsgeschwindigkeit bis zu der neuen Steuerungsgeschwindigkeit im Wesentlichen an der bekannten Position gemäß einem Mindestverzögerungsprofil zu verlangsamen.

8. Vorrichtung nach Anspruch 7, **dadurch gekennzeichnet, dass** das Mindestverzögerungsprofil einer Verzögerung entspricht, die das Fahrzeug (V) erfahren würde, falls der Fahrer nicht mehr auf ein Bremspedal drückt.

9. Fahrzeug (V), **dadurch gekennzeichnet, dass** es eine Steuerungsvorrichtung (DR) nach einem der Ansprüche 1 bis 8 umfasst.

10. Fahrzeug nach Anspruch 9, **dadurch gekennzeichnet, dass** es vom Typ Kraftfahrzeug ist.

## Claims

1. A device (DR) for controlling the speed of a vehicle (V), including processing means (MT) arranged, in response to a validation by a driver of said vehicle (V) of a new speed limit that is to be observed from a known position and is lower than a current control speed, to trigger the application of a selected deceleration profile, suitable for decreasing said current control speed to a new control speed that is at most equal to said new speed limit substantially at said known position, between a first position, comprised between a primary position of said vehicle (V) at a time at which said driver carries out said validation and a second position at which a maximum deceleration profile can be triggered at the latest, and said second position.

2. The device according to Claim 1, **characterized in that** said processing means (MT) are arranged to select as deceleration profile to be applied said maximum deceleration profile, and to trigger said application when said vehicle (V) is in said second position.

3. The device according to Claim 1, **characterized in that** said deceleration profile is selected by said driver in a group including at least one predefined intermediate deceleration profile and said maximum deceleration profile.

4. The device according to Claim 3, **characterized in that** each predefined intermediate deceleration profile is suitable for decreasing said current control speed up to said new control speed, between an intermediate position, situated upstream of said second position and as a function of said known position, and said known position.

5. The device according to Claim 4, **characterized in that** said processing means (MT) are arranged, when said primary position is situated downstream of said intermediate position and said driver has selected said corresponding predefined intermediate deceleration profile, for applying said maximum deceleration profile, and for triggering said application when said vehicle (V) is in said second position.

6. The device according to Claim 1, **characterized in that** said processing means (MT) are arranged for selecting a deceleration profile suitable for decreasing said current control speed until said new control speed, between said primary position and said known position, and for triggering said application when said vehicle (V) is in said primary position.

7. The device according to Claim 6, **characterized in that** said processing means (MT) are arranged for informing said driver of said new speed limit when said vehicle (V) is situated at a distance from said known position, necessary for decreasing said current control speed up to said new control speed substantially at said known position according to a minimum deceleration profile.

8. The device according to Claim 7, **characterized in that** said minimum deceleration profile corresponds to a deceleration which said vehicle (V) would undergo if said driver no longer depressed an accelerator pedal.

9. A vehicle (V), **characterized in that** it includes a control device (DR) according to one of Claims 1 to 8.

10. The vehicle according to Claim 9, **characterized in that** it is of the automobile type.
